# FASCICULE DE BREVET EUROPEEN

(11) **EP 4 266 828 B1**
(45) Date de publication et mention de la délivrance du brevet: **29.04.2026**
(21) Numéro de dépôt: 23157257.9
(22) Date de dépôt: 17.02.2023
(51) Int. Cl.: H05B 3/56, B64D 15/12, H01B 7/08

(54) **ORGANE CONDUCTEUR LAMINÉ POUR LA REALISATION D'UN SYSTEME CHAUFFANT ET PALE D'HÉLICOPTÈRE L'UTILISANT**
LAMINIERTES LEITERLEMENT ZUR HERSTELLUNG EINES HEIZSYSTEMS UND HUBSCHRAUBERBLATT, DAS DIESES VERWENDET
LAMINATED CONDUCTIVE ELEMENT FOR USE IN A HEATING SYSTEM AND HELICOPTER BLADE USING THE SAME

(30) Priorité: 19.04.2022 FR 2203605
(43) Date de publication de la demande: 25.10.2023
(73) Titulaire: Tresse Métallique J. Forissier, 42400 Saint-Chamond (FR)
(72) Inventeur: BOIDARD, Denis, 42400 Saint-Chamond (FR); MACHADO, Antonio, 42400 Saint-Chamond (FR)
(74) Mandataire: Ipsilon

(56) Documents cités:
- WO-A1-2004/082335
- WO-A1-96/07185
- FR-A1- 3 003 720
- US-A- 4 575 617
- US-A1- 2002 195 478

## Description

### Domaine technique

La présente invention se rapporte au domaine technique des éléments conducteurs pour la réalisation d'un système chauffant, notamment pour une utilisation dudit élément conducteur dans un système de dégivrage, et plus particulièrement un système de dégivrage installé dans une pale d'hélicoptère.

### Art antérieur

WO 96/07185 A1 décrit un procédé de fabrication d'un organe conducteur comprenant une gaine en matériau électriquement isolant, ladite gaine comprenant au moins deux éléments conducteurs s'étendant longitudinalement et bordés de part et d'autre par des zones neutres ne refermant pas d'éléments conducteurs, lesdits éléments conducteurs étant disposés sur la longueur dans des canaux, parallèles l'un par rapport à l'autre , le procédé comprenant des étapes consistant à : extruder en continu deux bandes en matériau électriquement isolant et les superposer l'une sur l'autre et de part et d'autre des éléments conducteurs.

Les organes conducteurs pour la réalisation de systèmes chauffants présentent l'avantage de pouvoir s'intégrer dans de nombreux dispositifs mécaniques, afin de pouvoir lutter contre le givre.

Ces organes conducteurs comprennent, par exemple, des tresses métalliques entourées d'une gaine constituée de matériau électriquement isolant.

La réalisation d'un système chauffant est effectuée par une pluralité de tresses métalliques connectées à un circuit électrique, qui va chauffer les tresses métalliques par effet Joules.

Il est connu le document EP2781693, qui décrit un organe conducteur pour la réalisation d'un système chauffant, notamment pour une utilisation dudit organe conducteur dans un système de dégivrage installé dans une pale d'hélicoptère, comprenant :
- une gaine isolante en matériau thermoplastique définissant deux zones comprenant au moins une tresse métallique débordante ;
- une zone neutre séparant les deux zones de la gaine isolante ; et
- les tresses métalliques sont disposées sur la longueur de la gaine isolante et de manière parallèle entre elles.

Ainsi, l'organe conducteur s'intègre de manière plus aisée dans une pale d'hélicoptère sans créer de déformations ou d'éléments en saillie sur la pale, ce qui permet d'améliorer l'efficacité du système de dégivrage.

Cependant, un tel organe peut encore être amélioré en termes de procédé de fabrication, notamment pour améliorer l'homogénéité de l'épaisseur de l'organe, mais aussi de surface de chauffage.

### Exposé de l'invention

L'un des buts de l'invention est donc de proposer un procédé de fabrication d'un organe conducteur pour un système de chauffage qui soit maitrisé pour obtenir un organe conducteur qui fournit une répartition uniforme de la diffusion de chaleur, tout en permettant son intégration, notamment dans une pale d'hélicoptère, sans nuire à la conception générale du système chauffant.

De plus, un autre objectif de cette invention est de fournir un procédé de fabrication d'un organe conducteur rapide, fiable et peu couteux.

À cet effet, il a été mis au point un procédé de fabrication d'un organe conducteur pour la réalisation d'un système chauffant comprenant une gaine en matériau électriquement isolant, ladite gaine comprenant au moins deux éléments conducteurs s'étendant longitudinalement et bordés de part et d'autre par des zones neutres ne refermant pas d'éléments conducteurs, lesdits éléments conducteurs étant disposés sur la longueur dans des canaux, parallèles l'un par rapport à l'autre.

Selon l'invention, le procédé selon la revendication 1 comprend des étapes consistant à :
- extruder en continu deux bandes en matériau électriquement isolant, et les superposer l'une sur l'autre et de part et d'autre des éléments conducteurs, notamment en sortie d'une extrudeuse, et
- laminer les zones neutres, ce qui permet de coller les deux bandes entres elles et de former des canaux dans lesquels les éléments conducteurs se retrouvent disposés.

De cette manière, l'épaisseur du système chauffant est mieux maitrisée facilitant son intégration dans un dispositif mécanique, tel que des pales d'hélicoptère. De plus, la répartition et la distance entre les éléments conducteurs sont elles aussi mieux maitrisées ce qui permet d'améliorer l'efficacité de chauffage du système par une meilleure répartition et maintien en position des éléments conducteurs.

En outre, le procédé selon l'invention permet de produire un organe conducteur en continu de manière fiable et peu onéreuse.

L'élément conducteur obtenu selon l'invention peut être livré en l'état, ou bien, selon une forme de réalisation préférée, les extrémités des éléments conducteurs sont dénudées, notamment pour réaliser, si nécessaire, la mise en forme du conducteur ou pour relier deux conducteurs entre eux, afin de permettre la connexion des extrémités des éléments conducteurs avec des connecteurs métalliques.

Selon l'invention, les zones neutres sont laminées par au moins autant de rouleaux que de zones neutres, par exemple les rouleaux sont positionnés en appui, des bandes en matériau électriquement isolant, et en contre appui contre une bande convoyeuse.

Cela permet de s'adapter aisément aux différences de largeur que peuvent présenter des éléments conducteurs, ainsi qu'aux différences de pas entre deux éléments conducteurs, que ce soit sur le même organe conducteur, ou bien sur deux organes conducteurs différents fabriqués l'un après l'autre sur la même ligne de fabrication. Le procédé selon l'invention est donc flexible et aisé à mettre en œuvre.

Dans un autre mode de réalisation, les zones neutres sont laminées par deux jeux de rouleaux positionnés de part et d'autre des bandes en matériau électriquement isolant, en contre appui l'un de l'autre.

De préférence, les rouleaux présentent des largeurs correspondant au maximum à la largeur des zones neutres pour ne pas écraser les éléments conducteurs, bien entendu et sans sortir du cadre de l'invention les rouleaux peuvent être plus fins que la largeur des zones neutres, ou plus large s'il s'agit de laminer des zones neutres périphériques.

Selon une forme de réalisation particulière, et afin de faciliter la connexion électrique de l'élément conducteur, les extrémités dénudées des éléments conducteurs sont recourbées.

Dans un mode de réalisation particulier, les extrémités dénudées, éventuellement recourbées, de l'élément conducteur sont revêtues d'un matériau électriquement isolant présenté en ruban et spiralé autour desdites extrémités dénudées.

L'organe conducteur n'est pas limité en nombre d'éléments conducteurs, de manière préférentielle il comprend 5 à 9 éléments conducteurs qui peuvent être de tout type approprié, par exemple sous la forme de tresses métalliques ou de rubans métalliques, notamment en cuivre ou en aluminium ou toute autre matière appropriée.

L'invention concerne également un organe conducteur selon la revendication 8 obtenu directement par le procédé selon l'invention, et à une pale d'hélicoptère selon la revendication 9 dans laquelle au moins un organe conducteur selon l'invention, est noyé dans son épaisseur.

### Brève description des dessins

D'autres avantages et caractéristiques ressortiront mieux de la description qui va suivre, donnée à titre d'exemple non limitatif, de l'organe selon l'invention, à partir des dessins annexés dans lesquels :
[Fig. 1] est une représentation, vue de dessus de l'organe conducteur pour la réalisation d'un système chauffant selon l'invention.
[Fig.2] est une coupe transversale de l'organe conducteur au niveau d'un élément conducteur.

### Description détaillée de l'invention

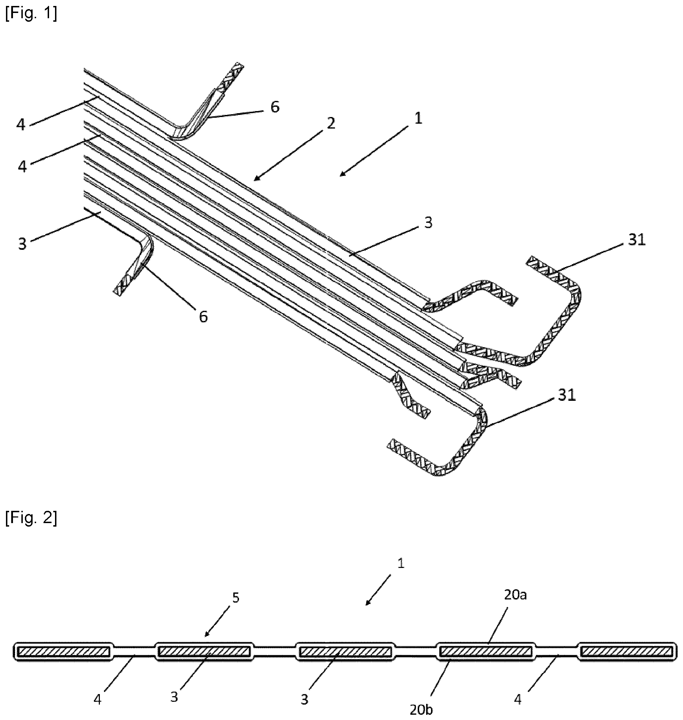

En référence aux figures 1 et 2, la présente invention concerne un procédé de fabrication d'un organe conducteur (1) pour la réalisation d'un dispositif chauffant comprenant une gaine (2) électriquement isolante. La gaine est réalisée en tout matériau approprié, tel qu'en polychlorure de vinyle, en thermoplastique, et de préférence en élastomère thermoplastique, ou thermoplastique copolyester.

La gaine (2) comprenant au moins deux éléments conducteurs (3) s'étendant longitudinalement et bordés de part et d'autre par des zones neutres (4) ne refermant pas d'éléments conducteurs (3).

Les éléments conducteurs (3) sont disposés sur la longueur dans des canaux (5), parallèles l'un par rapport à l'autre.

Le procédé de fabrication de l'organe conducteur comprend des étapes consistant à extruder en continu deux bandes (20a, 20b) en matériau électriquement isolant, lesdites bandes (20a, 20b) sont électriquement isolantes et aptes à diffuser la chaleur générée par effet Joules. Ces deux bandes (20a, 20b) sont superposées l'une sur l'autre et de part et d'autre des éléments conducteurs (3) afin d'entourer lesdits éléments conducteurs (3) de toute part.

De plus, et afin de coller les deux bandes (20a, 20b), celles-ci sont laminées entre les éléments conducteurs. En d'autres termes, seules les zones neutres sont laminées. Ainsi, les éléments conducteurs (3) ne peuvent plus se déplacer dans la gaine (2) de manière latérale, ce qui permet d'obtenir une meilleure uniformité de la dissipation de chaleur du système de chauffage.

En effet, le laminage des deux bandes (20a, 20b) permet de créer des canaux (5) dans lesquels se positionnent les éléments conducteurs (3).

Ainsi, les zones neutres (4) sont laminées par autant de rouleaux (non représentés) que de zones neutres (4). Lesdits rouleaux sont positionnés en appui contre les zones neutres, par exemple en contre appui contre une bande convoyeuse ou contre d'autres rouleaux. Le laminage est effectué en sortie d'extrudeuse. Les rouleaux présentent une largeur correspondant au maximum à la largeur des zones neutres (4).

L'organe conducteur (1) comprend par exemple, comme illustrée figure 1, cinq éléments conducteurs (3) positionnés dans cinq canaux (5) et comprend donc six zones neutres (4) bordantes de part et d'autre les éléments conducteurs (3).

Les éléments conducteurs (3) sont de tout type approprié, de préférence ce sont des tresses métalliques plates constituées d'une pluralité de fils en cuivre ou en aluminium ou encore en mélange des deux métaux, tressés entre eux. D'autres éléments conducteurs peuvent être envisagés sans sortir du cadre de l'invention, tels que des rubans ou feuillards conducteurs.

Les extrémités (31) des éléments conducteurs (3) positionnés dans les canaux (5) de la gaine (2) électriquement isolante sont dénudées afin de permettre leur connexion avec des connecteurs métalliques (non représentés), et d'une manière connue, lesdits connecteurs métalliques sont rattachés à un circuit électrique pour la réalisation du système chauffant.

Dans un mode de réalisation préféré, les extrémités (31) dénudées des éléments conducteurs (3) sont recourbées pour faciliter la connexion avec les connecteurs métalliques.

Les extrémités (31) dénudées et recourbées sont revêtues de préférence d'un matériau électriquement isolant présenté en ruban et spiralé autour desdites extrémités (31) dénudées et recourbées.

Les différents éléments conducteurs (3) peuvent ainsi être dénudés, recourbés et éventuellement revêtus de matériau électriquement isolant, à des endroits différents, ce qui permet d'obtenir des longueurs différentes des éléments conducteurs (3).

L'organe conducteur (1) obtenu directement par le procédé selon l'invention est très fin, de préférence moins de 10 mm afin de ne pas nuire à l'efficacité du système chauffant, notamment lorsque ce dernier est installé dans un mécanisme.

Selon une utilisation préférée mais non limitative de l'organe conducteur (1) selon l'invention, ce dernier est intégré dans l'épaisseur d'une pale d'hélicoptère (non représentée).

L'organe conducteur (1) illustré comprend 5 tresses métalliques maintenues et positionnées parallèles les unes par rapport aux autres et permet de réaliser un système de dégivrage performant de la pale d'hélicoptère lorsque les extrémités (31) dénudées, recourbées et revêtues en spirale de matériau électriquement isolant sont connectées avec des connecteurs métalliques eux même connectés avec un circuit électrique.

Les zones neutres (4) permettent d'isoler électriquement chaque tresse métallique afin d'obtenir un réchauffement uniforme de la pale mais permettent aussi à l'organe conducteur (1) de comprendre des zones de déformation facilitée afin de suivre le profil de la pale d'hélicoptère..

## Revendications

1. Procédé de fabrication d'un organe conducteur (1) pour la réalisation d'un système chauffant comprenant une gaine (2) en matériau électriquement isolant, ladite gaine (2) comprenant au moins deux éléments conducteurs (3) s'étendant longitudinalement et bordés de part et d'autre par des zones neutres (4) ne refermant pas d'éléments conducteurs (3), lesdits éléments conducteurs (3) étant disposés sur la longueur dans des canaux (5), parallèles l'un par rapport à l'autre, le procédé comprend des étapes consistant à :
- extruder en continu deux bandes (20a, 20b) en matériau électriquement isolant et les superposer l'une sur l'autre et de part et d'autre des éléments conducteurs (3) ; et ;
- laminer les zones neutres (4) ;
***caractérisé* en ce que** les zones neutres (4) sont laminées par au moins autant de rouleaux que de zones neutres (4).

2. Procédé selon la revendication 1, ***caractérisé* en ce que** les extrémités (31) des éléments conducteurs (3) sont dénudées afin de permettre leur connexion avec des connecteurs métalliques.

3. Procédé selon la revendication 1, ***caractérisé* en ce que** les zones neutres (4) sont laminées par deux jeux de rouleaux positionnés de part et d'autre des bandes, en contre appui l'un de l'autre.

4. Procédé selon l'une des revendications 1 à 3, ***caractérisé* en ce que** les rouleaux présentent des largeurs correspondant au maximum à la largeur des zones neutres (4).

5. Procédé selon la revendication 2, ***caractérisé* en ce que** les extrémités (31) dénudées des éléments conducteurs (3) sont recourbées.

6. Procédé selon la revendication 2 ou 5, ***caractérisé* en ce que** les extrémités (31) dénudées, éventuellement recourbées, des éléments conducteurs (3) sont revêtues d'un matériau électriquement isolant présenté en ruban et spiralé autour desdites extrémités (31) dénudées.

7. Procédé selon l'une des revendications précédentes, ***caractérisé* en ce que** les éléments conducteurs (3) sont sous la forme de tresses métalliques ou de rubans métallique.

8. Organe conducteur (1) obtenu selon le procédé de l'une des revendications précédentes, comprenant une gaine (2) en matériau électriquement isolant, ladite gaine (2) comprenant au moins deux éléments conducteurs (3) s'étendant longitudinalement et bordés de part et d'autre par des zones neutres (4) ne refermant pas d'éléments conducteurs (3), lesdits éléments conducteurs (3) étant disposés sur la longueur dans des canaux (5), **caractérisé en ce qu**'au moins deux éléments conducteurs (3) ont des largeurs différentes.

9. Pale d'hélicoptère, ***caractérisée* en ce qu'**elle comprend au moins un organe conducteur (1) selon la revendication 8, noyé dans son épaisseur.

## Patentansprüche

1. Verfahren zur Herstellung eines leitfähigen Elements (1) zur Realisierung eines Heizsystems, umfassend eine Hülle (2) aus elektrisch isolierendem Material, wobei die Hülle (2) mindestens zwei sich längs erstreckende leitfähige Elemente (3) aufweist, die beidseits von neutralen Zonen (4) begrenzt sind, die keine leitfähigen Elemente (3) enthalten, wobei die leitfähigen Elemente (3) entlang der Länge in zueinander parallelen Kanälen (5) angeordnet sind, wobei das Verfahren folgende Schritte umfasst:
- kontinuierliches Extrudieren von zwei Bändern (20a, 20b) aus elektrisch isolierendem Material und deren Übereinanderlegen sowie Anordnen beidseits der leitfähigen Elemente (3); und
- Walzen der neutralen Zonen (4);
***dadurch gekennzeichnet,* dass** die neutralen Zonen (4) mit mindestens ebenso vielen Walzen gewalzt werden, wie neutrale Zonen (4) vorhanden sind.

2. Verfahren nach Anspruch 1, ***dadurch gekennzeichnet,* dass** die Enden (31) der leitfähigen Elemente (3) abisoliert werden, um deren Verbindung mit metallischen Steckverbindern zu ermöglichen.

3. Verfahren nach Anspruch 1, ***dadurch gekennzeichnet,* dass** die neutralen Zonen (4) durch zwei Walzensätze gewalzt werden, die beidseits der Bänder angeordnet sind und gegeneinander abgestützt sind.

4. Verfahren nach einem der Ansprüche 1 bis 3, ***dadurch gekennzeichnet,* dass** die Walzen Breiten aufweisen, die höchstens der Breite der neutralen Zonen (4) entsprechen.

5. Verfahren nach Anspruch 2, ***dadurch gekennzeichnet,* dass** die abisolierten Enden (31) der leitfähigen Elemente (3) gebogen sind.

6. Verfahren nach Anspruch 2 oder 5, ***dadurch gekennzeichnet,* dass** die abisolierten Enden (31), gegebenenfalls gebogen, der leitfähigen Elemente (3) mit einem elektrisch isolierenden Material in Bandform ummantelt sind, welches spiralförmig um die genannten abisolierten Enden (31) gewickelt ist.

7. Verfahren nach einem der vorhergehenden Ansprüche, ***dadurch gekennzeichnet,* dass** die leitfähigen Elemente (3) in Form von Metallgeflechten oder Metallbändern vorliegen.

8. Leitfähiges Element (1), hergestellt nach dem Verfahren gemäß einem der vorhergehenden Ansprüche, umfassend eine Hülle (2) aus elektrisch isolierendem Material, wobei die Hülle (2) mindestens zwei sich längs erstreckende leitfähige Elemente (3) umfasst, die beidseits von neutralen Zonen (4) begrenzt sind, die keine leitfähigen Elemente (3) enthalten, wobei die leitfähigen Elemente (3) entlang der Länge in Kanälen (5) angeordnet sind, ***dadurch gekennzeichnet,* dass** mindestens zwei leitfähige Elemente (3) unterschiedliche Breiten aufweisen.

9. Hubschrauberrotorblatt, ***dadurch gekennzeichnet,* dass** es mindestens ein leitfähiges Element (1) nach Anspruch 8 umfasst, das in seine Dicke eingebettet ist.

## Claims

1. Method for manufacturing a conductive element (1) for producing a heating system comprising a sheath (2) made of electrically insulating material, said sheath (2) comprising at least two conductive elements (3) extending longitudinally and bordered on either side by neutral zones (4) not containing conductive elements (3), said conductive elements (3) being arranged along the length in channels (5) parallel to one another, the method comprising steps consisting in:
- continuously extruding two strips (20a, 20b) of electrically insulating material and superposing them on one another and on either side of the conductive elements (3); and
- laminating the neutral zones (4);
***characterized in that*** the neutral zones (4) are laminated by at least as many rollers as there are neutral zones (4).

2. Method according to claim 1, ***characterized in that*** the ends (31) of the conductive elements (3) are stripped in order to allow their connection with metallic connectors.

3. Method according to claim 1*, **characterized in that*** the neutral zones (4) are laminated by two sets of rollers positioned on either side of the strips, in abutment against each other.

4. Method according to any one of claims 1 to 3, ***characterized in that*** the rollers have widths corresponding at most to the width of the neutral zones (4).

5. Method according to claim 2, ***characterized in that*** the stripped ends (31) of the conductive elements (3) are bent.

6. Method according to claim 2 or 5, ***characterized in that*** the stripped ends (31), optionally bent, of the conductive elements (3) are coated with an electrically insulating material in tape form and spirally wound around said stripped ends (31).

7. Method according to any one of the preceding claims, ***characterized in that*** the conductive elements (3) are in the form of metallic braids or metallic strips.

8. Conductive element (1) obtained according to the method of any one of the preceding claims, comprising a sheath (2) made of electrically insulating material, said sheath (2) comprising at least two conductive elements (3) extending longitudinally and bordered on either side by neutral zones (4) not containing conductive elements (3), said conductive elements (3) being arranged along the length in channels (5), ***characterized in that*** at least two conductive elements (3) have different widths.

9. Helicopter blade, ***characterized in that*** it comprises at least one conductive element (1) according to claim 8, embedded within its thickness.
